# EUROPEAN PATENT SPECIFICATION

(11) **EP 4 108 416 B1**
(45) Date of publication and mention of the grant of the patent: **29.01.2025**
(21) Application number: 21883345.7
(22) Date of filing: 22.10.2021
(51) Int. Cl.: B29C 51/08, B32B 38/12, H01M 50/116, H01M 50/124, B29C 51/26, B29C 33/68, B29C 33/60, B29C 33/42, B29C 51/28, B29L 31/00

(54) **BATTERY CASE FORMING APPARATUS, AND BATTERY CASE MANUFACTURING METHOD USING SAME**
VORRICHTUNG ZUR FORMUNG EINES BATTERIEGEHÄUSES UND VERFAHREN ZUR HERSTELLUNG EINES BATTERIEGEHÄUSES DAMIT
APPAREIL DE FORMATION DE BOÎTIER DE BATTERIE ET PROCÉDÉ DE FABRICATION DE BOÎTIER DE BATTERIE FAISANT APPEL À CELUI-CI

(30) Priority: 22.10.2020 KR 20200137864
(43) Date of publication of application: 28.12.2022
(73) Proprietor: LG Energy Solution, Ltd., Seoul 07335 (KR)
(72) Inventor: PARK, Jin Yong, Daejeon 34122 (KR); CHOI, Hang June, Daejeon 34122 (KR); MOON, Jeong Oh, Daejeon 34122 (KR); CHI, Ho June, Daejeon 34122 (KR)
(74) Representative: Goddar, Heinz J.
(86) International application number: PCT/KR2021/014929
(87) International publication number: WO 2022/086278

(56) References cited:
- JP-A- 2002 050 326
- JP-A- 2008 123 896
- JP-A- H05 220 520
- KR-A- 20110 039 767
- KR-A- 20180 032 043
- KR-A- 20180 038 765
- KR-B1- 102 143 366

## Description

### [Technical Field]

The present invention relates to a battery case shaping apparatus and a battery case manufacturing method using the same. More particularly, the present invention relates to a battery case shaping apparatus including a punch configured to shape a battery case for pouch-shaped batteries, wherein the battery case shaping apparatus further includes an elastic separator capable of, when a laminate sheet that is used as the battery case is pressed by the punch, minimizing damage to the surface of the laminate sheet, and a battery case manufacturing method using the same.

### [Background Art]

Demand for a secondary battery as an energy source for mobile devices, electric vehicles, etc. has abruptly increased. In particular, demand for a lithium secondary battery, which has high energy density and high discharge voltage, is high.

Based on the shape and material thereof, the lithium secondary battery may be classified as a cylindrical secondary battery made of a metal material, a prismatic secondary battery made of a metal material, or a pouch-shaped secondary battery made of a laminate sheet. The pouch-shaped secondary battery has advantages in that the pouch-shaped secondary battery is stacked with high degree of integration, thereby having high energy density per unit weight, is manufactured at low cost, and is easily deformable. Consequently, the pouch-shaped secondary battery is used in various devices.

The pouch-shaped secondary battery uses a laminate sheet including an outer coating layer, a metal blocking layer, and an inner adhesive layer as a battery case, and is configured to have a structure in which an electrode assembly is received in a receiving portion formed in the laminate sheet together with an electrolytic solution.

In order to shape an electrode assembly receiving portion in the pouch-shaped secondary battery, a deep drawing method of disposing a laminate sheet on a die, fixing the laminated sheet using a gripper, and pressing the laminate sheet using a punch is used. During deep drawing, however, external defects, such as pin-holes or cracks, are formed on the outer surface of the laminate sheet due to limited softness of the laminate sheet and the force of friction between the punch and the laminate sheet.

Even though surface roughness of the punch that contacts the laminate sheet is extremely reduced in order to prevent formation of such external defects, it is difficult to prevent external defects from being formed on the laminate sheet due to friction caused by repeated punching. Particularly, in the case in which the thickness of the laminate sheet, specifically the metal blocking layer, is small, shapeability of the laminate sheet is reduced, whereby pin-holes or cracks may be more easily formed. For this reason, it is difficult to shape the electrode assembly receiving portion so as to have a large depth, whereby it is difficult to manufacture a high-capacity lithium secondary battery.

Patent Document 1 discloses a sheathing member for batteries, the sheathing member including an outer layer including a heat-resistant resin film, a metal foil layer, and an inner layer including a thermoplastic resin film having a lubricant added thereto, wherein the lubricant is attached between the outer layer and the inner layer.

In Patent Document 1, the lubricant is attached between the outer layer and the inner layer, whereby sliding of the outer layer relative to a second die and sliding of the inner layer relative to a first die are improved, and therefore it is possible to inhibit bending of the outer circumferential portion of the sheathing member for batteries.

Patent Document 2 discloses a packaging material for shaping including a substrate layer, as an outer layer, a thermally fusible resin layer, as an inner layer, and a metal foil layer disposed between the two layers, wherein the thermally fusible resin layer is configured to have a single layer structure or a multilayer structure, and the innermost layer of the thermally fusible resin layer is made of a resin composition containing an anti-blocking agent, a slip agent, and a fluoropolymer-based lubricant.

In Patent Document 2, slip between the surface of the innermost layer of the thermally fusible resin layer and the surface of a shaping die is improved when the packaging material is shaped, whereby shapeability may be improved.

Patent Document 1 and Patent Document 2 do not recognize a problem in that defects are generated as the result of the sheathing member for batteries being elongated during drawing, and do not suggest a method of solving the problem.

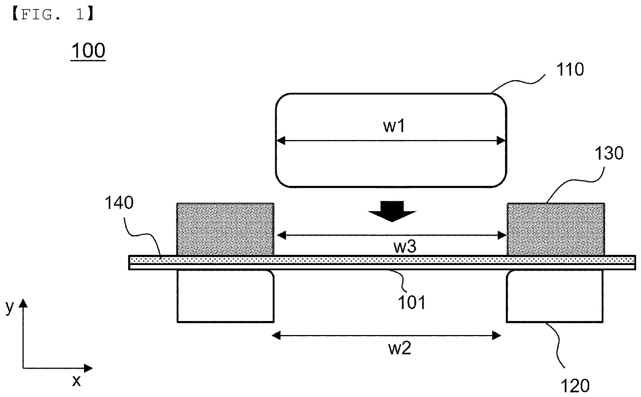

Patent document D3 discloses a battery case shaping apparatus comprising a punch (reference 30)configured to press a laminate sheet (reference 1) in order to shape a battery case; a die (reference 20) in which an accommodation portion is formed, the accommodation portion having a size corresponding to an electrode assembly receiving portion that is shaped by the punch (paragraph [0025]; a holder (reference 24) configured to fix an outer periphery of the laminate sheet (paragraph [0025] and figure 1); and an elastic separator (reference 100) located under the punch in order to prevent direct contact between the punch and the laminate sheet (paragraph [0030]).

Therefore, there is a high necessity for technology capable of preventing damage to the external appearance of a laminate sheet and improving shapeability during shaping of the laminate sheet.

Japanese Registered Patent Publication No. 5959205 (2016.07.07) ("Patent Document 1")

Korean Patent Application Publication No. 2020-0027987 (2020.03.13) ("Patent Document 2")

Korean Patent Publication No. 102 143 336 (2020.08.12) ("Patent document 3")

### [Disclosure]

### [Technical Problem]

The present invention has been made in view of the above problems, and it is an object of the present invention to provide a battery case shaping apparatus capable of reducing the force of friction between a punch configured to press a laminate sheet in order to shape a battery case and the laminate sheet due to contact therebetween, thereby preventing damage to the laminate sheet, and a battery case shaping method using the same.

### [Technical Solution]

In order to accomplish the above object, a battery case shaping apparatus according to the present invention includes a punch configured to press a laminate sheet in order to shape a battery case, a die in which an accommodation portion is formed, the accommodation portion having a size corresponding to an electrode assembly receiving portion that is shaped by the punch, a holder configured to fix the outer periphery of the laminate sheet, and an elastic separator located under the punch in order to prevent direct contact between the punch and the laminate sheet.

In the battery case shaping apparatus according to the present invention, the elastic separator is fixed to the holder.

In the battery case shaping apparatus according to the present invention, the elastic separator may be fixed to a lower part of the side surface of the holder.

In the battery case shaping apparatus according to the present invention, the lower surface of the punch may be configured to be parallel to the upper surface of the elastic separator before the battery case is shaped by the punch.

In the battery case shaping apparatus according to the present invention, a liquid lubricant may be added into a space formed by the elastic separator and the holder.

In the battery case shaping apparatus according to the present invention, a recess may be formed in at least a portion of the lower surface of the punch.

In the battery case shaping apparatus according to the present invention, a pad may be disposed in and at a lower part of the accommodation portion of the die.

In the battery case shaping apparatus according to the present invention, the pad may be made of an elastic material and may include a central part that convexly protrudes.

In the battery case shaping apparatus according to the present invention, the protruding central part of the pad may be configured to contract as the result of pressing by the punch, whereby the overall thickness of the pad may become uniform.

In the battery case shaping apparatus according to the present invention, the elastic separator may be a watertight elastic separator.

The present invention provides a battery case shaping method using the battery case shaping apparatus.

Specifically, the battery case shaping method may include (a) disposing the laminate sheet on the die, (b) fixing the laminate sheet to the die using the holder having the elastic separator attached to the holder, and (c) pressing the elastic separator and the laminate sheet using the punch.

The battery case shaping method according to the present invention may further include adding a liquid lubricant into a space formed by the elastic separator and the holder between step (b) and step (c).

In the battery case shaping method according to the present invention, in step (c), the pressing may be performed until the pad disposed in the lower part of the accommodation portion of the die is compressed and flat.

In the battery case shaping method according to the present invention, when compression of the pad starts, liquid lubricant may move to the edge of the lower surface of the punch.

In the battery case shaping method according to the present invention, the region of the laminate sheet that is elongated by the pressing in step (c) may be a side surface of the electrode assembly receiving portion and an outer circumferential portion of the bottom of the electrode assembly receiving portion.

### [Advantageous Effects]

As is apparent from the above description, in the present invention, an electrode assembly receiving portion is shaped in the state in which an elastic separator is interposed between a laminate sheet and a punch, whereby it is possible to prevent direct contact between the punch and the laminate sheet, and therefore it is possible to minimize a stick-slip effect that occurs on the surface of the punch and the surface of the laminate sheet.

In addition, a liquid lubricant is added, whereby it is possible to reduce the force of friction between the punch and the laminate sheet.

In addition, it is possible to extend an elongation region of the laminate sheet as the result of addition of the liquid lubricant and the elastic separator, whereby it is possible to prevent the laminate sheet from being locally excessively elongated and thus thinned.

As described above, it is possible to reduce frictional force during a manufacturing process and to prevent the thickness of a side wall of the electrode assembly receiving portion of the battery case from being locally excessively reduced, whereby it is possible to prevent pin-holes or cracks from being formed on the battery case.

Also, in the case in which a battery case shaping apparatus and method according to the present invention are used even though laminate sheets having the same thickness are used, it is possible to more deeply form the electrode assembly receiving portion, and therefore it is possible to increase capacity of a battery cell and to improve energy density of the battery cell.

### [Description of Drawings]

FIG. 1 is a sectional view of a battery case manufacturing apparatus according to a first embodiment of the present invention.
FIG. 2 is an exploded perspective view of the battery case manufacturing apparatus according to the first embodiment of the present invention.
FIG. 3 is a sectional view of a battery case manufacturing apparatus according to a second embodiment of the present invention.
FIG. 4 is a sectional view of a battery case manufacturing apparatus according to a third embodiment of the present invention.
FIG. 5 is an exploded perspective view of the battery case manufacturing apparatus according to the third embodiment of the present invention.
FIG. 6 is a vertical sectional view of a battery case manufactured using the battery case manufacturing apparatus according to the present invention.
FIG. 7 is a vertical sectional view of a central part of a punch according to the present invention.
FIG. 8 sequentially shows a battery case manufacturing process according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

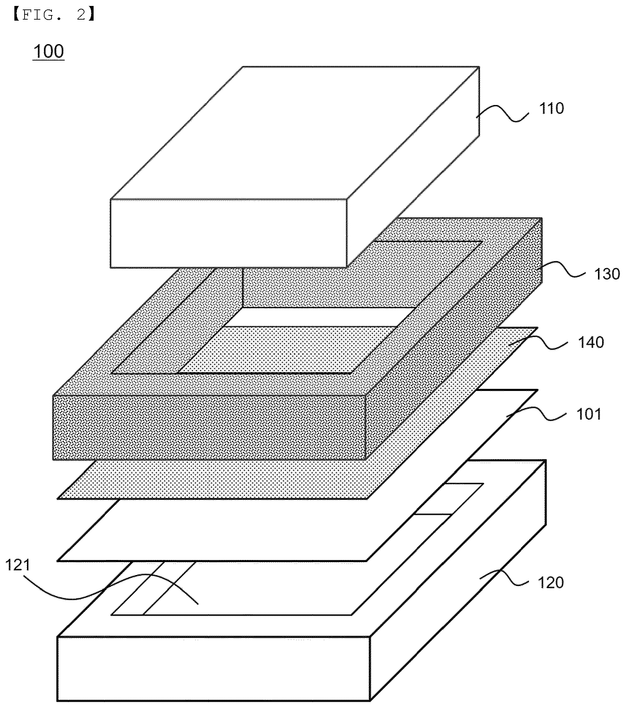

FIG. 1 is a front view of a battery case manufacturing apparatus according to a first embodiment of the present invention, and FIG. 2 is an exploded perspective view of the battery case manufacturing apparatus according to the first embodiment of the present invention.

Referring to FIGS. 1 and 2, the battery case manufacturing apparatus 100 includes a punch 110 configured to press a laminate sheet 101 in order to shape a battery case, a die 120 having formed therein an accommodation portion 121 having a size corresponding to an electrode assembly receiving portion that is shaped by the punch, a holder 130 configured to fix the outer periphery of the laminate sheet 101, and an elastic separator 140 located under the punch 110 in order to prevent direct contact between the punch 110 and the laminate sheet 101.

In order to manufacture a pouch-shaped battery case using the laminate sheet, the laminate sheet 101 is disposed on the die 120 having formed therein the accommodation portion 121 having the size corresponding to the electrode assembly receiving portion, the outer periphery of the laminate sheet 101 is fixed to the die using the holder 130, and the laminate sheet 101 is pressed by the punch 110, whereby the electrode assembly receiving portion may be shaped.

At this time, in order to prevent direct contact between the laminate sheet and the punch, the elastic separator 140 is disposed between the laminate sheet and the punch.

If the laminate sheet and the punch directly contact each other, slip does not easily occur due to friction between the surfaces of the laminate sheet and the punch. As a result, the region of the laminate sheet that is elongated is narrowed, and therefore only a local region of the laminate sheet is elongated. Specifically, since the portion of the laminate sheet that becomes a side wall of the electrode assembly receiving portion when the laminate sheet is shaped into a battery case is mainly elongated, the thickness of the portion is excessively reduced, and therefore the battery case is easily damaged.

Since a stick-slip phenomenon easily occurs on the surface of the laminate sheet and the surface of the punch, as described above, the laminate sheet may be locally excessively elongated, and therefore a battery case shaping defect rate may be increased.

In the present invention, the laminate sheet 101 is pressed by the punch 110 in the state in which the elastic separator 140 is disposed between the laminate sheet 101 and the punch 110, and therefore the surface of the laminate sheet and the surface of the punch do not directly contact each other. Consequently, it is possible to solve a conventional problem in that the laminate sheet is scratched due to a non-smooth surface of the punch or introduction of foreign matter between the punch and the laminate sheet.

The x-axis width w1 of the punch 110 may be less than the x-axis distance w2 between opposite sides of the die, and the x-axis distance w2 between opposite sides of the die may be less than the x-axis distance w3 between opposite sides of the holder.

Consequently, the punch may easily enter the die through the holder.

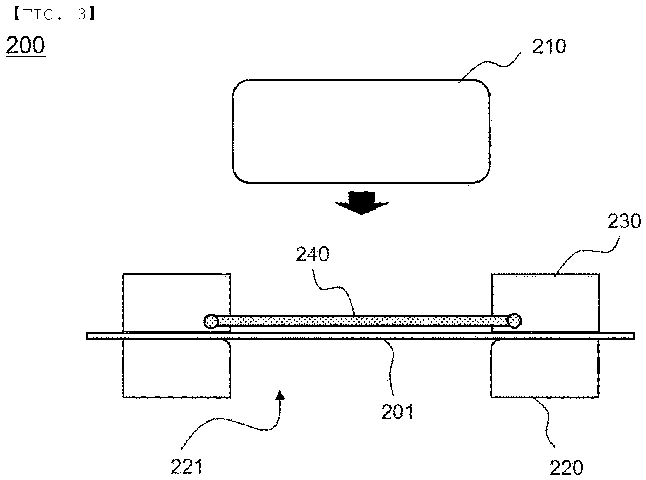

FIG. 3 is a sectional view of a battery case manufacturing apparatus according to a second embodiment of the present invention.

Referring to FIG. 3, the battery case shaping apparatus 200 includes a punch 210 configured to press a laminate sheet 201 in order to shape a battery case, a die 220 having formed therein an accommodation portion 221 having a size corresponding to an electrode assembly receiving portion that is shaped by the punch, a holder 230 configured to fix the outer periphery of the laminate sheet 201, and an elastic separator 240 located under the punch 210 in order to prevent direct contact between the punch 210 and the laminate sheet 201. The elastic separator 240 is fixed to the holder 230. The holder 230, to which the elastic separator 240 is fixed, is disposed on the laminate sheet 201, whereby the laminate sheet is fixed.

Since the elastic separator 240 is fixed to the holder 230, as described above, the state in which the elastic separator 240 is fixed to the holder may be stably maintained when the laminate sheet 201 is pressed by the punch 210.

For example, the elastic separator 240 may be attached to the lower surface of the holder 230, or may be fixed to the lower part of the side surface of the holder 230. When the elastic separator 240 is attached to the lower surface of the holder 230, the force of fixing the laminate sheet 201 may be further increased by a microscopically protruding portion formed as the result of coupling between the elastic separator 240 and the holder 230. When the elastic separator 240 is fixed to the lower part of the side surface of the holder 230, particularly when the elastic separator 240 is inserted into and fixed to a recess formed in the lower part of the side surface of the holder 230, the force of coupling between the elastic separator 240 and the holder 230 is further increased. As a result, coupling between the elastic separator and the holder is maintained even when the elastic separator 240 is excessively elongated. When the depth of the receiving portion is large, a more advantageous effect may be achieved.

Before the battery case is shaped by the punch, the lower surface of the punch is located parallel to the upper surface of the elastic separator 240. In addition, the elastic separator and the laminate sheet are located parallel to each other. When the elastic separator is pressed by the punch, therefore, the entire area of the punch may apply uniform pressure to the entire area of the elastic separator and the laminate sheet.

In this specification, force generated by the punch is applied to the elastic separator and the laminate sheet with the same magnitude and in the same direction, and deformation of the laminate sheet is identical to deformation of the elastic separator.

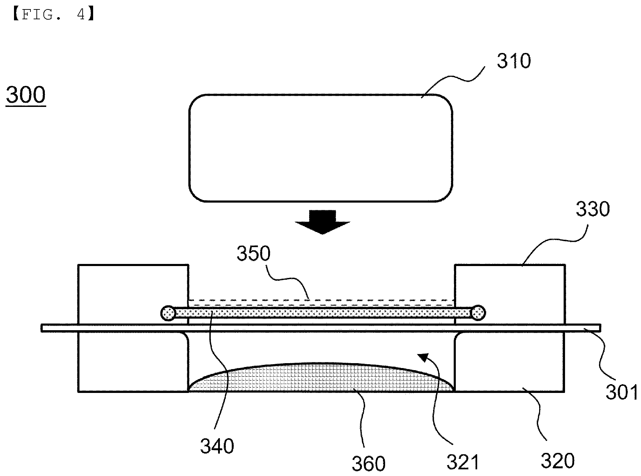

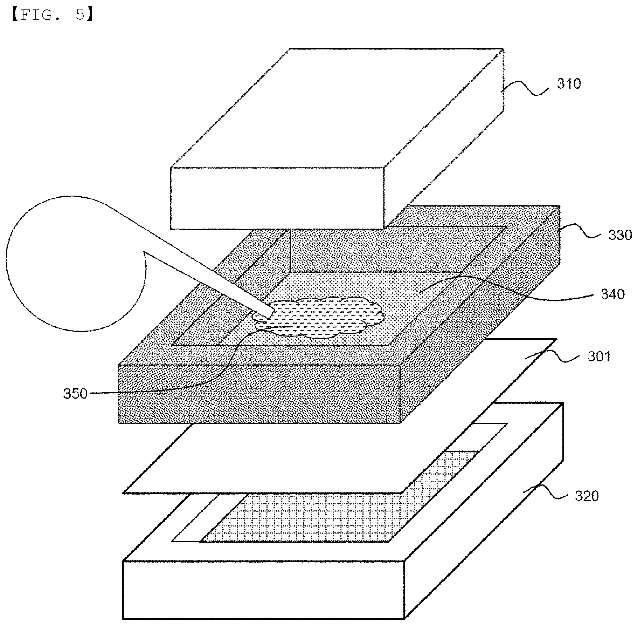

FIG. 4 is a sectional view of a battery case manufacturing apparatus according to a third embodiment of the present invention, and FIG. 5 is an exploded perspective view of the battery case manufacturing apparatus according to the third embodiment of the present invention.

Referring to FIGS. 4 and 5, the battery case shaping apparatus 300 includes a punch 310 configured to press a laminate sheet 301 in order to shape a battery case, a die 320 having formed therein an accommodation portion 321 having a size corresponding to an electrode assembly receiving portion that is shaped by the punch, a holder 330 configured to fix the outer periphery of the laminate sheet 301, and an elastic separator 340 located under the punch 310 in order to prevent direct contact between the punch 310 and the laminate sheet 301.

The elastic separator 340 is fixed to the holder 330. As a result, a space having the elastic separator as a lower surface thereof and the inner surface of the holder 330 as a side wall thereof is formed, and a liquid lubricant 350 is added into the space. Since the elastic separator is a watertight elastic separator, the liquid lubricant is not discharged through the elastic separator, and is movable only in the space.

The liquid lubricant remarkably reduces the force of friction between the punch and the elastic separator, whereby the surface of the elastic separator and the surface of the punch may very smoothly slip relative to each other.

As a result, the region of the laminate sheet that is elongated by the punch is increased, and therefore the average elongation of the elongated region may be reduced. For example, the thickness of the laminate sheet in an elongated state may be about 70% or more the thickness of the laminate sheet before elongation.

For example, at least one selected from the group consisting of hydrocarbon-based oil, such as liquid paraffin, grease, mineral vegetable oil, an emulsified oil, an anti-emulsifier, a pour point depressant, a viscosity modifier, an antifoaming agent, mineral oil including pure mineral oil or pure mineral oil including an additive, a fatty oil including animal oil and vegetable oil, a blended oil of mineral oil and a fatty oil, and a synthetic oil may be used as the liquid lubricant.

In the case in which the liquid lubricant is used, as described above, it is possible to prevent a local region of the laminate sheet from being excessively elongated.

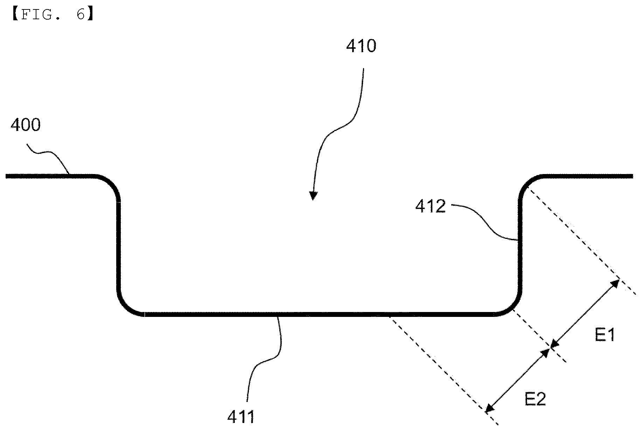

FIG. 6 is a vertical sectional view of a battery case manufactured using the battery case manufacturing apparatus according to the present invention. Referring to FIG. 6, an electrode assembly receiving portion 410 is concavely formed in the battery case 400. The electrode assembly receiving portion 410 may be constituted by a bottom 411 of the electrode assembly receiving portion and a side surface 412 of the electrode assembly receiving portion.

If no liquid lubricant is used, unlike the present invention, the laminate sheet is elongated only at a main elongation region E1. As a result, the average elongation of the main elongation region is high, whereby this region is weakened, and therefore the battery case may be easily damaged.

Since the liquid lubricant is used in the present invention, however, slip occurs well between the surface of the punch and the surface of the elastic separator. Consequently, the elongation region is extended to an additional elongation region E2 in addition to the main elongation region E1. That is, the region of the laminate sheet that is elongated may be the side surface 412 of the electrode assembly receiving portion and the outer circumferential portion of the bottom 411 of the electrode assembly receiving portion.

As the elongation region is extended, as described above, the average elongation is reduced, whereby it is possible to reduce a thickness reduction rate of the battery case even after the battery case is shaped, and it is possible to prevent the battery case from being locally weakened.

In the battery case manufactured using the battery case shaping apparatus according to the present invention, the thickness of the smallest thickness portion of the battery case may be 70% or more the thickness of the largest thickness portion of the battery case.

Referring back to FIGS. 4 and 5, a pad 360 is disposed in the accommodation portion 321 of the die 320 at the lower part thereof.

The pad 360 may be made of an elastic material so as to be contracted by the punch 310. The pad 360 may be formed in a quadrangular shape when viewed in plan, and may be configured to have a structure in which a central part of the pad convexly protrudes and the thickness of the pad is gradually decreased toward the outer circumferential portion thereof. When the laminate sheet is pressed by the punch 310 so as to be shaped, first, the protruding central part of the pad comes into contact with the laminate sheet moved downwards by the punch. Subsequently, when the laminate sheet is continuously pressed downwards by the punch, the protruding central part of the pad is contracted, whereby the overall thickness of the pad becomes uniform. As a result, the bottom of the electrode assembly receiving portion may become flat.

In addition, since the elastic pad 360 is disposed, it is possible to prevent the outside of the lower surface of the laminate sheet from being scratched.

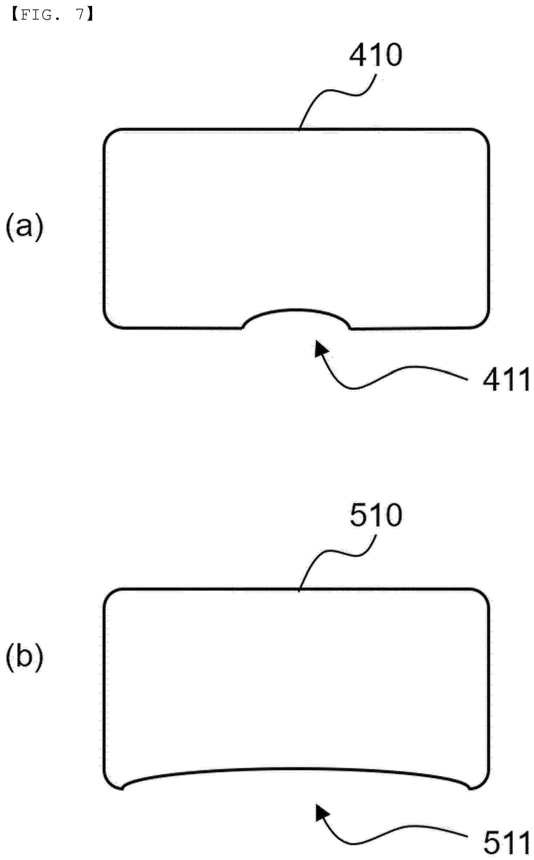

FIG. 7 is a vertical sectional view of a central part of a punch according to the present invention.

Referring to FIG. 7, a recess 411 or 511 is formed in the lower surface of the punch 410 or 510.

The recess 411 formed in the punch 410 is configured such that the central part of the lower surface of the punch becomes concave, and the recess 511 formed in the punch 510 is configured such that the entirety of the lower surface of the punch becomes concave.

A space is formed in the lower surface of the punch by the recess formed as described above. When the elastic separator and the laminate sheet are pressed by the punch, a portion of the liquid lubricant is gathered, and the remainder of the liquid lubricant moves to the edge of the lower surface of the punch.

The force of friction between the central part of the punch and the elastic separator is reduced by the liquid lubricant gathered in the recess.

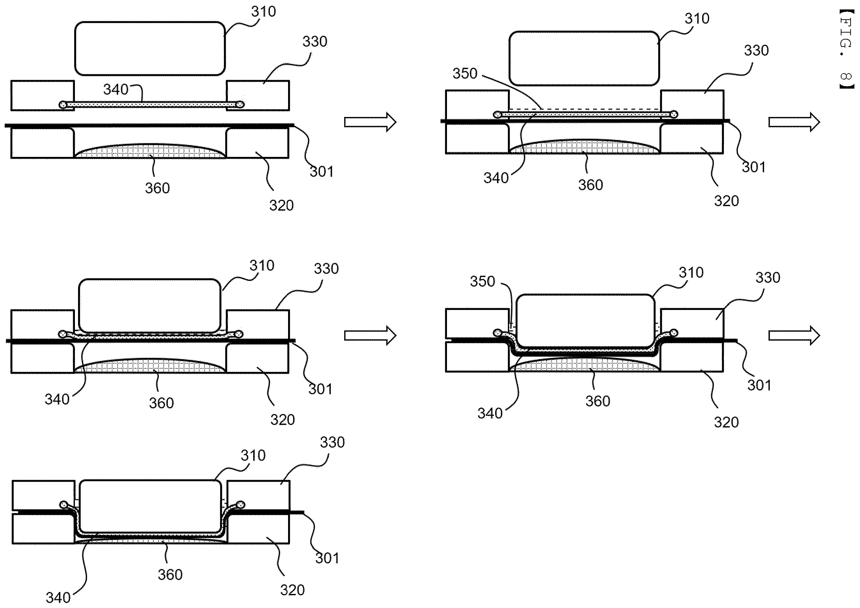

FIG. 8 shows a battery case shaping method according to the present invention from left to right and from top to bottom.

The battery case shaping method according to the present invention includes a step of disposing a laminate sheet 301 on the die 320, a step of fixing the laminate sheet 301 to the die 320 using the holder 330, to which the elastic separator 340 is attached, and a step of pressing the elastic separator 340 and the laminate sheet 301 using the punch 310.

Before the laminate sheet 301 is pressed by the punch 310 after the laminate sheet 301 is fixed to the die 320, the liquid lubricant 350 is added to the space formed by the elastic separator 340 and the holder 330. Since the elastic separator according to the present invention is a watertight elastic separator, the liquid lubricant is not discharged to the outside of the elastic separator.

In the step of pressing the laminate sheet 310 using the punch 310, pressing is performed until the pad 360 disposed in the lower part of the accommodation portion of the die 320 is compressed and flat. Since the pad 360 is configured to have a structure in which the central part of the pad protrudes and the thickness of the pad is gradually decreased toward the outer circumferential portion thereof, first, the laminate sheet 301 comes into contact with the protrude central part of the pad 360.

When compression of the pad 360 starts, the central part of the pad 360 is in contact with the laminate sheet 301, but a space is formed between the outer circumferential portion of the pad 360 and the laminate sheet 301. As the result of pressing, the liquid lubricant 350 on the elastic separator 340 moves to the space formed between the laminate sheet 301 and the outer circumferential portion of the pad 360, i.e., the edge of the lower surface of the punch 310.

In the case in which a recess is formed in the lower surface of the punch 310, a portion of the liquid lubricant may be gathered in the recess, and therefore it is possible to reduce the force of friction between the punch and the elastic separator at the lower surface of the punch.

As the punch 310 is inserted into the accommodation portion of the die 320, the liquid lubricant 350 moves to the edge of the lower surface of the punch 310, and eventually moves along the side surface of the punch 310. As a result, the liquid lubricant 350 may be present not only between the lower surface of the punch 310 and the surface of the elastic separator 340 but also between the side surface of the punch 310 and the surface of the elastic separator 340, whereby it is possible to reduce the force of friction between the punch and the elastic separator. With progress of pressing, the liquid lubricant 350 more widely spreads due to a capillary phenomenon.

In the present invention, as described above, the pad, the central part of which is convex, is disposed at the lower part of the accommodation portion of the die, whereby the liquid lubricant may easily move to the main elongation region and the additional elongation region of the laminate sheet. Consequently, the force of friction between the surface of the elastic separator and the surface of the punch is minimized, whereby it is possible to widely secure the additional elongation region of the laminate sheet, and therefore it is possible to manufacture a battery case having a small local reduction in thickness.

Those skilled in the art to which the present invention pertains will appreciate that various applications and modifications are possible within the category of the present invention based on the above description.

### (Description of Reference Symbols)

100, 200, 300: Battery case manufacturing apparatuses
101, 201, 301: Laminate sheets
110, 210, 310, 410, 510: Punches
120, 220, 320: Dies
121, 221, 321: Accommodation portions
130, 230, 330: Holders
140, 240, 340: Elastic separators
411, 511: Recesses
350: Liquid lubricant
360: Pad
400: Battery case
410: Electrode assembly receiving portion
411: Bottom of electrode assembly receiving portion
412: Side surface of electrode assembly receiving portion
E1: Main elongation region
E2: Additional elongation region

### [Industrial Applicability]

The present invention relates to a battery case shaping apparatus including a punch configured to shape a battery case for pouch-shaped batteries, wherein the battery case shaping apparatus further includes an elastic separator capable of, when a laminate sheet that is used as the battery case is pressed by the punch, minimizing damage to the surface of the laminate sheet, and a battery case manufacturing method using the same, and therefore the present invention has industrial applicability.

## Claims

1. A battery case shaping apparatus (100, 200, 300) comprising:
a punch (110, 210, 310, 410, 510) configured to press a laminate sheet (101, 201, 301) in order to shape a battery case (400);
a die (120, 220, 320) in which an accommodation portion (121, 221, 321) is formed, the accommodation portion (121, 221, 321) having a size corresponding to an electrode assembly receiving portion (410) that is shaped by the punch (110, 210, 310, 410, 510);
a holder (130, 230, 330) configured to fix an outer periphery of the laminate sheet; and
an elastic separator (140, 240, 340) located under the punch in order to prevent direct contact between the punch (110, 210, 310, 410, 510) and the laminate sheet (101, 201, 301), **characterized in that** the elastic separator (140, 240, 340) is fixed to the holder (130, 230, 330).

2. The battery case shaping apparatus according to claim 1, wherein the elastic separator (140, 240, 340) is fixed to a lower part of a side surface of the holder (130, 230, 330).

3. The battery case shaping apparatus according to claim 1, wherein, a lower surface of the punch (110, 210, 310, 410, 510) is configured to be parallel to an upper surface of the elastic separator (140, 240, 340) before the battery case (400) is shaped by the punch (110, 210, 310, 410, 510).

4. The battery case shaping apparatus according to any one of claims 1 to 3, wherein a liquid lubricant (350) is added into a space formed by the elastic separator (140, 240, 340) and the holder (130, 230, 330).

5. The battery case shaping apparatus according to claim 1, wherein a recess (411, 511) is formed in at least a portion of a lower surface of the punch (110, 210, 310, 410, 510).

6. The battery case shaping apparatus according to claim 1, wherein a pad (360) is disposed in and at a lower part of the accommodation portion (121, 221, 321) of the die (120, 220, 320).

7. The battery case shaping apparatus according to claim 6, wherein the pad (360) is made of an elastic material and includes a central part that convexly protrudes.

8. The battery case shaping apparatus according to claim 7, wherein the protruding central part of the pad (360) is configured to contract as a result of pressing by the punch (110, 210, 310, 410, 510), whereby an overall thickness of the pad (360) becomes uniform.

9. A battery case shaping method using the battery case shaping apparatus according to any one of claims 1 to 8, the battery case shaping method comprising:
(a) disposing the laminate sheet (101, 201, 301) on the die;
(b) fixing the laminate sheet (101, 201, 301) to the die using the holder having the elastic separator (140, 240, 340) attached to the holder (130, 230, 330); and
(c) pressing the elastic separator (140, 240, 340) and the laminate sheet using the punch (110, 210, 310, 410, 510), wherein the elastic separator (140, 240, 340) is fixed to the holder (130, 230, 330.

10. The battery case shaping method according to claim 9, further comprising adding a liquid lubricant (350) into a space formed by the elastic separator (140, 240, 340) and the holder (130, 230, 330) between step (b) and step (c).

11. The battery case shaping method according to claim 9, wherein, in step (c), the pressing is performed until the pad (360) disposed in the lower part of the accommodation portion (121, 221, 321) of the die (120, 220, 320) is compressed and flat.

12. The battery case shaping method according to claim 11, wherein, when compression of the pad (360) starts, liquid lubricant (350) moves to an edge of the lower surface of the punch (110, 210, 310, 410, 510).

13. The battery case shaping method according to claim 9, wherein a region of the laminate sheet (101, 201, 301) that is elongated by the pressing in step (c) is a side surface of the electrode assembly receiving portion (412) and an outer circumferential portion of a bottom of the electrode assembly receiving portion (410).

## Patentansprüche

1. Batteriegehäuseformvorrichtung (100, 200, 300) aufweisend:
einen Stempel (110, 210, 310, 410, 510), der eingerichtet ist, eine Laminatfolie (101, 201, 301) zu pressen, um ein Batteriegehäuse (400) zu formen;
einen Die (120, 220, 320), in dem ein Aufnahmeabschnitt (121, 221, 321) ausgebildet ist, wobei der Aufnahmeabschnitt (121, 221, 321) eine Größe aufweist, die einem Elektrodenanordnungsaufnahmeabschnitt (410) entspricht, welcher durch den Stempel (110, 210, 310, 410, 510) geformt wird;
einen Halter (130, 230, 330), der eingerichtet ist, einen Außenumfang der Laminatfolie zu fixieren; und
einen elastischen Separator (140, 240, 340), der unter dem Stempel angeordnet ist, um einen direkten Kontakt zwischen dem Stempel (110, 210, 310, 410, 510) und der Laminatfolie (101, 201, 301) zu verhindern, **dadurch gekennzeichnet, dass** der elastische Separator (140, 240, 340) an dem Halter (130, 230, 330) befestigt ist.

2. Batteriegehäuseformvorrichtung nach Anspruch 1, wobei der elastische Separator (140, 240, 340) an einem unteren Teil einer Seitenfläche des Halters (130, 230, 330) befestigt ist.

3. Batteriegehäuseformvorrichtung nach Anspruch 1, wobei eine untere Fläche des Stempels (110, 210, 310, 410, 510) eingerichtet ist, parallel zu einer oberen Fläche des elastischen Separators (140, 240, 340) zu sein, bevor das Batteriegehäuse (400) durch den Stempel (110, 210, 310, 410, 510) geformt wird.

4. Batteriegehäuseformvorrichtung nach einem der Ansprüche 1 bis 3, wobei ein flüssiges Schmiermittel (350) in einen Raum hinzugefügt wird, der durch den elastischen Separator (140, 240, 340) und den Halter (130, 230, 330) gebildet wird.

5. Batteriegehäuseformvorrichtung nach Anspruch 1, wobei eine Aussparung (411, 511) in zumindest einem Abschnitt einer unteren Fläche des Stempels (110, 210, 310, 410, 510) gebildet ist.

6. Batteriegehäuseformvorrichtung nach Anspruch 1, wobei ein Pad (360) in und an einem unteren Teil des Aufnahmeabschnitts (121, 221, 321) des Dies (120, 220, 320) angeordnet ist.

7. Batteriegehäuseformvorrichtung nach Anspruch 6, wobei das Pad (360) aus einem elastischen Material hergestellt ist und einen zentralen Teil aufweist, der konvex vorsteht.

8. Batteriegehäuseformvorrichtung nach Anspruch 7, wobei der vorstehende zentrale Teil des Pads (360) eingerichtet ist, sich als ein Ergebnis des Pressens durch den Stempel (110, 210, 310, 410, 510) zusammenzuziehen, wodurch eine Gesamtdicke des Pads (360) gleichförmig wird.

9. Batteriegehäuseformverfahren unter Verwendung der Batteriegehäuseformvorrichtung nach einem der Ansprüche 1 bis 8, wobei das Batteriegehäuseformverfahren umfasst:
(a) Anordnen der Laminatfolie (101, 201, 301) auf dem Die;
(b) Fixieren der Laminatfolie (101, 201, 301) an dem Die unter Verwendung des Halters, der den elastischen Separator (140, 240, 340) aufweist, der an dem Halter (130, 230, 330) angebracht ist; und
(c) Pressen des elastischen Separators (140, 240, 340) und der Laminatfolie unter Verwendung des Stempels (110, 210, 310, 410, 510), wobei der elastische Separator (140, 240, 340) an dem Halter (130, 230, 330) befestigt ist.

10. Batteriegehäuseformverfahren nach Anspruch 9, ferner umfassend: Hinzufügen eines flüssigen Schmiermittels (350) in einen Raum, der durch den elastischen Separator (140, 240, 340) und den Halter (130, 230, 330) zwischen Schritt (b) und Schritt (c) gebildet wird.

11. Batteriegehäuseformverfahren nach Anspruch 9, wobei in Schritt (c) das Pressen durchgeführt wird, bis das Pad (360), das in dem unteren Teil des Aufnahmeabschnitts (121, 221, 321) des Dies (120, 220, 320) angeordnet ist, zusammengedrückt und flach ist.

12. Batteriegehäuseformverfahren nach Anspruch 11, wobei, wenn das Zusammendrücken des Pads (360) beginnt, sich das flüssige Schmiermittel (350) zu einem Rand der unteren Fläche des Stempels (110, 210, 310, 410, 510) bewegt.

13. Batteriegehäuseformverfahren nach Anspruch 9, wobei ein Bereich der Laminatfolie (101, 201, 301), der durch das Pressen in Schritt (c) verlängert wird, eine Seitenfläche des Elektrodenanordnungsaufnahmeabschnitts (412) und ein Außenumfangsabschnitt eines Bodens des Elektrodenanordnungsaufnahmeabschnitts (410) ist.

## Revendications

1. Appareil de formage de boîtier de batterie (100, 200, 300) comprenant :
une poinçonneuse (110, 210, 310, 410, 510) configurée pour presser une feuille stratifiée (101, 201, 301) afin de former un boîtier de batterie (400) ;
une matrice (120, 220, 320) dans laquelle est formée une partie d'hébergement (121, 221, 321), la taille de la partie d'hébergement (121, 221, 321) correspondant à une partie de réception d'un ensemble d'électrode (410) formée par la poinçonneuse (110, 210, 310, 410, 510) ;
un dispositif de retenue (130, 230, 330) configuré pour fixer un pourtour extérieur de la feuille stratifiée ; et
un séparateur élastique (140, 240, 340) situé sous la poinçonneuse afin d'empêcher tout contact direct entre la poinçonneuse (110, 210, 310, 410, 510) et la feuille stratifiée (101, 201, 301), **caractérisé en ce que** le séparateur élastique (140, 240, 340) est fixé au dispositif de retenue (130, 230, 330).

2. Appareil de formage de boîtier de batterie selon la revendication 1, le séparateur élastique (140, 240, 340) étant fixé à une partie inférieure d'une surface latérale du dispositif de retenue (130, 230, 330).

3. Appareil de formage de boîtier de batterie selon la revendication 1, une surface inférieure de la poinçonneuse (110, 210, 310, 410, 510) étant configurée pour être parallèle à une surface supérieure du séparateur élastique (140, 240, 340) préalablement au formage du boîtier de batterie (400) par la poinçonneuse (110, 210, 310, 410, 510).

4. Appareil de formage de boîtier de batterie selon une quelconque des revendications 1 à 3, un lubrifiant liquide (350) étant introduit dans un espace formé par le séparateur élastique (140, 240, 340) et le dispositif de retenue (130, 230, 330).

5. Appareil de formage de boîtier de batterie selon la revendication 1, un évidement (411, 511) étant formé dans au moins une partie d'une surface inférieure de la poinçonneuse (110, 210, 310, 410, 510).

6. Appareil de formage de boîtier de batterie selon la revendication 1, un tampon (360) étant disposé dans et sur une partie inférieure de la partie d'hébergement (121, 221, 321) de la matrice (120, 220, 320).

7. Appareil de formage de boîtier de batterie selon la revendication 6, le tampon (360) étant réalisé avec un matériau élastique, et comprenant une partie centrale faisant saillie de façon bombée.

8. Appareil de formage de boîtier de batterie selon la revendication 7, la partie centrale saillante du tampon (360) étant configurée pour se contracter sous l'effet du pressage exercé par la poinçonneuse (110, 210, 310, 410, 510), une épaisseur globale du tampon (360) devenant uniforme.

9. Procédé de formage de boîtier de batterie faisant usage de l'appareil de formage de boîtier de batterie selon une quelconque des revendications 1 à 8, le procédé de formage de boîtier de batterie comprenant :
(a) la disposition de la feuille stratifiée (101, 201, 301) sur la matrice ;
(b) la fixation de la feuille stratifiée (101, 201, 301) sur la matrice à l'aide du dispositif de retenue, le séparateur élastique (140, 240, 340) étant fixé au dispositif de retenue (130, 230, 330) ; et
(c) le pressage du séparateur élastique (140, 240, 340) et de la feuille stratifiée à l'aide de la poinçonneuse (110, 210, 310, 410, 510), le séparateur élastique (140, 240, 340) étant fixé au dispositif de retenue (130, 230, 330).

10. Procédé de formage de boîtier de batterie selon la revendication 9, comprenant en outre l'introduction d'un lubrifiant liquide (350) dans un espace formé par le séparateur élastique (140, 240, 340) et le dispositif de retenue (130, 230, 330) entre les étapes (b) et (c).

11. Procédé de formage de boîtier de batterie selon la revendication 9, dans lequel, à l'étape (c), le pressage est effectué jusqu'à ce que le tampon (360) disposé dans la partie inférieure de la partie d'hébergement (121, 221, 321) de la matrice (120, 220, 320) soit comprimé et plat.

12. Procédé de formage de boîtier de batterie selon la revendication 11, dans lequel, à lorsque commence la compression du tampon (360), un lubrifiant liquide (350) se déplace vers un bord de la surface inférieure de la poinçonneuse (110, 210, 310, 410, 510).

13. Procédé de formage de boîtier de batterie selon la revendication 9, une zone de la feuille stratifiée (101, 201, 301), allongée sous l'effet du pressage effectué à l'étape (c), étant une surface latérale de la partie réceptrice de l'ensemble d'électrode (412) et une partie circonférentielle extérieure d'un fond de la partie de réception d'un ensemble d'électrode (410).
